# EUROPEAN PATENT SPECIFICATION

(11) **EP 3 236 751 B1**
(45) Date of publication and mention of the grant of the patent: **25.03.2020**
(21) Application number: 15820847.0
(22) Date of filing: 21.12.2015
(51) Int. Cl.: A01N 25/04, A01N 47/36, A01P 13/00

(54) **CONCENTRATE FORMULATIONS, PESTICIDAL OIL DISPERSIONS, METHODS AND USES THEREOF**
KONZENTRATFORMULIERUNGEN, PESTIZIDE ÖLDISPERSIONEN, VERFAHREN UND VERWENDUNGEN DAVON
FORMULATIONS CONCENTRÉES, DISPERSIONS PESTICIDES HUILEUSES, PROCÉDÉS ET UTILISATIONS DE CELLES-CI

(30) Priority: 22.12.2014 EP 14199706
(43) Date of publication of application: 01.11.2017
(73) Proprietor: Rhodia Operations, 75009 Paris (FR)
(72) Inventor: BRAMATI, Valerio, 20020 Arese Milan (IT); BALASTRE, Marc, The Marbella, 04-02 Singapore 276952 (SG)
(74) Representative: Cardon, Flavie
(86) International application number: PCT/EP2015/080793
(87) International publication number: WO 2016/102467

(56) References cited:
- EP-A2- 0 789 999
- WO-A1-2013/043678

## Description

This invention relates to the field of agricultural pesticide compositions.

In particular this invention concerns oil concentrate formulations, convenient for dispersing solid active material(s) and liquid emulsions obtained from such concentrates, both type of compositions having excellent storage stability.

Active phytosanitary products like agricultural pesticides, including insecticides, fungicides, herbicides, miticides, and plant growth regulators as well as tank-mix adjuvants or fertilizers are generally produced in pure or highly concentrated form. However, they are to be used on agricultural operation sites in low concentration. To this end, they are usually formulated with other ingredients that enable easy dilution by the farm operator. The dilution is generally performed by mixing the phytosanitary concentrated formulation with water.

Two kinds of formulations represent the largest sales volumes which are concentrate emulsions (EC) and concentrate suspensions (SC). Such concentrate formulations are advantageous since they are easy to prepare, they have a high concentration in active material, a good stability, a high biological activity, and are cheap. However, concentrate emulsions which comprise an active agent dissolved in an organic solvent need to use organic solvents like for example xylene, naphtalene and N-methylpyrrolidone which are potentially dangerous regarding the environment and human health. In contrast, concentrate suspensions which are stable suspensions of active agent(s) in an aqueous liquid and are safe and easy to manipulate, are not sufficiently effective and not convenient for active agent which are sensible to water.

To solve the previous drawbacks a third type of pesticides has been developed, *i.e.* oil dispersions. This type of composition consists in a suspension of active material(s) in an apolar medium, generally an oily fluid intended to be diluted with water before use. The document WO2013/043678 A1 discloses some concentrate formulations that can be readily combined with pesticide to form an oil dispersion which subsquently may be diluted, in particular by a farm operator, with water to form the corresponding pesticide emulsion. These concentrate formulations notably comprise a thickener in order to prevent the sedimentation of the solid active material(s). However, this amount in thickener has also to be adjusted for keeping the concentrate formulation under a pourable form. For obvious reasons, it may be difficult to comply with both requirements for some solid active agents.

The instant invention is precisely intended to achieve this purpose.

Contrary to all expectations, the inventors have observed that this problem can be solved by providing a specific concentrate formulation.

Thus, according to a first aspect, the invention is directed to a non-aqueous, emulsifiable and pourable concentrate formulation, in particular useful for preparing or vehiculing herbicidal crop protection active material, comprising:
(a)at least one non-ionic surfactant chosen from sorbitol derivatives, fatty alcohol ethoxylates, fatty acid ethoxylates and mixtures thereof;
(b)at least one alkyl-benzene sulfonate surfactant as anionic surfactant;
(c)a liquid medium wholly or partly formed from at least one vegetable oil alkyl ester or mixtures thereof;
(d)at least 4% by weight of at least one phyllosilicate as thickener relative to the total weight of the composition, said phyllosilicate being in particular modified bentonite; and
(e)at least one activator of said phyllosilicate.

For the purpose of the present invention *"pourable"* means a composition of suitable viscosity, for example less than 10,000 mPa.s, preferably less than 3000 mPa.s measured at 20 rotations per minute (rpm) and 20°C according to the CIPAC test normed MT 192.

For the purpose of the present invention *"emulsifiable"* means a composition that forms an emulsion when diluted into water and mixed by inversion of the vial. Preferably, after 10 inversions of the vial (CIPAC MT36 and MT180) such emulsion is stable 30 minutes and in particular two hours after its formation which means that no or only little phase separation of cream is observed.

Indeed, as shown in the examples, a concentrate formulation according to the invention is particularly advantageous for stabilizing a dispersion of active material such as pesticidal materials that presents a good storage stability, while still being pourable and emulsifiable when diluted with water.

For the purpose of the present invention, the dispersed active material is a solid active material.

For the purpose of the present invention, a solid active material is a compound having a melting point greater or equal to 30°C.

More particularly, the inventors have shown that the claimed concentrate formulations as well as the emulsions obtained by diluting such concentrates with water show a good storage stability.

For the purpose of the present invention *"good storage stability"* means that the concentrate formulations remain homogeneous (*i.e* they almost do not exhibit phase separation (sedimentation, syneresis ...)) over time, in particular which stay almost homogeneous when stored for at least one week at 0°C, or for at least 2 weeks to 54°C or one month at 45°C (standardized tests CIPAC MT 39.3 and MT 46.3).

For the purpose of the present invention, *"room temperature"* means a temperature ranging from 18 to 25°C.

The advantages of the concentrate formulation according to the invention, like its low viscosity, its small or non-syneresis, its non-settling of solids are precisely mainly controlled through the use of its three components system (a), (b) and (d).

Thus, in a preferred embodiment, the concentrate formulation is characterized in that component (b) is present in a weight ratio (b)/(d) ranging from 0.4 to 5 and preferably from 0.8 to 1.2.

According to a second aspect, the invention focuses on the use of a concentrate formulation according to the invention for preparing a liquid aqueous emulsion or a suspoemulsion.

According to a third aspect, the invention targets the use of a concentrate formulation according to the invention for preparing a pesticidal oil dispersion.

According to a fourth aspect, the invention concerns an emulsifiable and stable pesticidal oil dispersion comprising:
(a)at least one non-ionic surfactant chosen from sorbitol derivatives, fatty alcohol ethoxylates, fatty acid ethoxylates and mixtures thereof;
(b)at least one alkyl-benzene sulfonate surfactant as anionic surfactant;
(c)a liquid medium wholly or partly formed from at least one vegetable oil alkyl ester or mixtures thereof;
(d)at least one phyllosilicate as thickener, in particular modified bentonite;
(e)at least one activator of said phyllosilicate; and
(f) at least one oil insoluble pesticidal active material;
wherein component (b) is present in a weight ratio (b)/(d) ranging from 0.4 to 5 and preferably from 0.8 to 1.2.

For the purpose of the invention pesticidal active material are preferably biologically active compounds used to control agricultural pests and include, for example, herbicides, plant growth regulators, crop dessicants, fungicides, bacteriocides, bacteriostats, insecticides, and insect repellants.

However, the non-aqueous emulsifiable and pourable concentrate formulations of the invention may also be convenient for the preparation of concentrated fertilizers, adjuvants and other agricultural or bioactive compositions. They allow to achieve stable concentrated formulations and thereby convenient to store and transport.

As detailed here-after, the non-aqueous emulsifiable and pourable concentrate formulations of the invention provide a storage and delivery medium for a great diversity of bioactive agents.

At last, the non-aqueous active concentrates are also readily dispersible for easy mixing and dilution with water at the user sites.

Thus, according to a fifth aspect, the invention is aimed at a method for making a pesticidal oil dispersion according to the invention comprising the mixing of a concentrate formulation according to the invention with at least one oil insoluble pesticidal active material.

According to a sixth aspect, the invention relates to the use of a pesticidal oil dispersion according to the invention for preparing a liquid pesticidal aqueous emulsion in particular convenient for spraying.

According to a seventh aspect, the invention concerns a method of preventing and/or combating infestation of plants by pests and regulating plant growth comprising the application on said plant or locus of a spray mixture obtained by diluting with water a pesticidal oil dispersion according to the invention or by adding at least one oil insoluble pesticidal active material and water to a concentrate formulation according to the invention.

### CONCENTRATE FORMULATION

As above mentioned the invention mainly relates to a non-aqueous emulsifiable and pourable concentrate formulation including in a liquid medium wholly or partly formed from at least one vegetable oil alkyl ester or mixtures thereof (c), at least one specific surfactant mixture (a) and (b) and at least 4% weight of at least one phyllosilicate like preferably a modified bentonite, with at least one activator thereof.

### Specific surfactant mixture according to the invention

For the purpose of the present invention, *"surfactant"* means an amphiphilic compound that comprises a hydrophilic moiety and a hydrophobic moiety and that, when present in water, lowers the surface tension of the water.

A composition according to the invention contains at least one non-ionic surfactant (a) selected among the group consisting of sorbitol derivatives, fatty alcohol ethoxylates, fatty acid ethoxylates and mixtures thereof.

Preferably, a concentrate formulation according to the invention contains at least one sorbitol derivative, as non-ionic surfactant.
- More particularly, the sorbitol derivatives may be chosen among sorbitan esters.

According to an advantageous embodiment, the sorbitol derivatives are chosen among ethoxylated sorbitan esters like for example the Alkamuls OL40 commercialized by Solvay, Alkamuls T/80 commercialized by Solvay and preferably the Alkamuls T85V commercialized by Solvay.
- More particularly, suitable fatty alcohol ethoxylates include linear or branched, saturated or unsaturated (C₆-C₂₂), more typically (C₁₀-C₂₂), alcohols, such as, for example, lauryl alcohol, tridecyl alcohol, cetyl alcohol, stearyl alcohol, and oleyl alcohol, that are ethoxylated with, for example, from 1 to 50, more typically 2 to 50, oxyethylene units per molecule, such as, for example, ethoxylated lauryl alcohol, ethoxylated cetyl alcohol, ethoxylated tridecyl alcohol, ethoxylated stearyl alcohol, and ethoxylated oleyl alcohol. In one embodiment, the ethoxylated fatty alcohol surfactant is ethoxylated tridecyl alcohol.

According to an advantageous embodiment, the composition according to the invention contains at least one ethoxylated tridecyl alcohol like for example the Rhodasurf TR6 commercialized by Solvay.
- More particularly, the fatty acid ethoxylates may be chosen among polyethylene glycol derivatives, and more preferably among polyethylene glycol esters such as Alkamuls AP, Alkamuls A and Alkamuls VO2003 that are commercialized by Solvay.

According to an advantageous embodiment, the composition according to the invention contains at least one fatty acid ethoxylate like for example Alkamuls AP (polyethylene glycol monooleate).

A concentrate according to the invention may contain from 10 to 80 % by weight and in particular from 10 to 30 % by weight of its total weight of non-ionic surfactant(s) (a).

A composition according to the invention contains at least one alkyl-benzene sulfonate surfactant as anionic surfactant (b).

Suitable alkyl-benzene sulfonate surfactants include for example, calcium dodecylbenzene sulfonate, sodium octadecylphenyl sulfonate, isopropylamine dodecyl benzene sulfonate, sodium tridecyl benzene sulfonate and sodium dodecyl benzene sulfonate, disodium alkyldiphenyloxide disulfonates.

According to an advantageous embodiment, the composition according to the invention contains at least one dodecylbenzenesulfonate like for example the Rhodacal 60BE commercialized by Solvay.

A concentrate according to the invention may contain from 2 to 20 % by weight, in particular from 2 to 10 % by weight, for instance from 3 to 10 % by weight, for instance from 4 to 8 % by weight of its total weight of anionic surfactant(s) (b).

According to a specific embodiment, a composition according to the invention may contain non-ionic surfactant(s) (a) and anionic surfactant (b) in a weight ratio (a)/(b) ranging from 0.5 to 40 and preferably from 1 to 15.

The surfactant mixture requested according to the invention provides a pourable concentrate, and facilitates emulsification when the concentrate is placed in the presence of water, and provides stabilization over time of the so-formed emulsion by avoiding separation of the phases. Indeed and as shown in the following example 3, a surfactant mixture which does not comply with the requirements of the invention do not enable to achieve a pourable concentrate formulation.

It has also to be noticed that a concentrate formulation according to the invention advantageously contains a mixture of (a) and (b) having an HLB value ranging from 9.5 to 11.5 and preferably from 10.2 to 10.7.

As it is well known, HLB (hydrophilic-lipophilic balance) is the balance between the size and strength of the hydrophilic group and the size and strength of the lipophilic group of the surfactant. The HLB value according to Griffin is defined in J. Soc. Cosm. Chem. 1954 (volume 5), pages 249-256.

### Vegetable oil alkyl ester

The apolar liquid medium of the concentrate formulations according to the invention comprises or consists in vegetable oil alkyl esters and their mixtures (c).

For the purpose of the present invention, *"liquid medium"* means a medium that is in the liquid phase at room temperature and a pressure of one atmosphere.

More particularly, this liquid medium constitutes the liquid phase of the concentrate and is dedicated to vehicle at least the surfactants, the thickener and activator thereof requested according to the invention. As shown in the following examples, it is the combination of all these components which allows achieving a pourable liquid medium wherein at least one solid active material(s) may be efficiently suspended for a long time.

According to a fist embodiment, the liquid medium is wholly formed from at least one vegetable oil alkyl ester or mixtures thereof.

According to a second embodiment, the liquid medium is partly formed from at least one vegetable oil alkyl ester or mixtures thereof. The liquid medium thus may comprise other solvents and in particular aromatic solvents such as for example the Solvesso™ solvents commercialized by ExxonMobil Chemical.

These vegetable oils alkyl esters may be selected in the group consisting of alkyl esters of soybean oil, corn oil, cottonseed oil, sunflower oil, maize oil, rice oil, olive oil, linseed oil, rapeseed oil, palm oil, coconut oil and mixtures thereof.

For the purpose of the present invention, *"alkyl"* means a saturated straight chain or branched chain hydrocarbon radical, such as for example, methyl, ethyl, n-propyl, iso-propyl, n-butyl, sec-butyl, t-butyl, pentyl, n-hexyl.

As vegetable oil alkyl esters particularly convenient for the invention, the methylated vegetable oil esters may be cited like for example rapeseed oil methyl ester, soybean oil methyl ester or corn oil methyl ester.

A concentrate according to the invention may contain from 10 to 90 % by weight and in particular from 40 to 80 % by weight of its total weight of vegetable oil alkyl esters.

### Phyllosilicate

As previously stated, a concentrate according to the invention also contains as essential component at least one phyllosilicate (d).

This component is present in a sufficient amount to act as a thickener *i.e* in an amount greater or equal to 4% by weight relative to the total weight of the composition.

Examples of suitable phyllosilicates are synthetic clays, such as laponite, or naturally occurring clays, such as bentonite, hectorite and montmorillonite. Clays of this type are often chemically treated to render them compatible with the liquid medium in which they are to be incorporated. For example, bentonite clays for use in non-polar are often treated with fatty amines or fatty quaternary ammonium compounds and are commercially available under the name Bentone (Rheox Inc., New Jersey).

In one embodiment, the phyllosilicate (d) comprises an inorganic, typically aluminosilicate or magnesium silicate, colloid-forming clay, typically a smectite (also known as montmorillonoid) clay. These clay materials can be described as expandable layered clays, wherein the term "expandable" as used herein in reference to such clay relates to the ability of the layered clay structure to be swollen, or expanded, on contact with water.

Smectites are three-layered clays. There are two distinct classes of smectite-type clays. In the first class of smectites, aluminum oxide is present in the silicate crystal lattice and the clays have a typical formula of Al₂(Si₂O₅)₂(OH)₂. In the second class of smectites, magnesium oxide is present in the silicate crystal lattice and the clays have a typical formula of Mg₃(Si₂O₅)(OH)₂. The range of the water of hydration in the above formulas can vary with the processing to which the clay has been subjected. This is immaterial to the use of the smectite clays in the present compositions in that the expandable characteristics of the hydrated clays are dictated by the silicate lattice structure. Furthermore, atomic substitution by iron and magnesium can occur within the crystal lattice of the smectites, while metal cations such as Na⁺, Ca²⁺, as well as H⁺, can be present in the water of hydration to provide electrical neutrality. Although the presence of iron in such clay material is preferably avoided to minimize chemical interaction between clay and optional composition components, such cation substitutions in general are immaterial to the use of the clays herein since the desirable physical properties of the clay are not substantially altered thereby.

The layered expandable aluminosilicate smectite clays useful herein are further characterized by a dioctahedral crystal lattice, whereas the expandable magnesium silicate smectite clays have a trioctahedral crystal lattice.

Suitable smectite clays, include, for example, montmorillonite (bentonite), volchonskoite, nontronite, beidellite, hectorite, saponite, sauconite and vermiculite, are commercially available.

As noted above, the clays employed in the compositions of the present invention contain cationic counter ions such as protons, sodium ions, potassium ions, calcium ions, magnesium ions and the like. It is customary to distinguish between clays on the basis of one cation which is predominately or exclusively absorbed. For example, a sodium clay is one in which the absorbed cation is predominately sodium. Such absorbed cations can become involved in exchange reactions with cations present in aqueous solutions.

Commercially obtained clay materials can comprise mixtures of the various discrete mineral entities. Such mixtures of the minerals are suitable for use in the present compositions. In addition, natural clays sometimes consist of particles in which unit layers of different types of clay minerals are stacked together (interstratification). Such clays are called mixed layer clays, and these materials are also suitable for use herein.

Preferably, the phyllosilicate is of the type of bentonite or derivative thereof like for example bentone 27V and bentone 34 that are commercialized by Elementis.

A concentrate of the invention advantageously contains from 4% to 10% and in particular from 4% to 6% by weight of phyllosilicate with respect to its total weight.

Regarding the activator (e) of the phyllosilicate, it is to be chosen among the following polar solvents. Polar solvents help to "wet" the clay and effect delamination thus facilitating the dispersion of the clay in the liquid medium. These activators of the phyllosilicate according to the present invention are chosen from methanol, ethanol, acetone, methylethylketone and propylene carbonate.

A concentrate of the invention may advantageously contain from 10 to 100 % and in particular from 20 to 50 % by weight of activator (e) with respect to the weight of phyllosilicate (d).

In one embodiment, the phyllosilicate is the main, preferable the sole, thickening agent in a concentrate of the invention.

In particular, in one embodiment, the concentrate of the invention contains less than 1 % by weight, relative to the total weight of the concentrate, for example less than 0.5% by weight, for example less than 0.4% by weight, for example less than 0.1% by weight, or even 0% by weight of any additional thickening agent different from a phyllosilicate (d) of the invention, such as silica (more typically fumed silica) or synthetic polymeric thickeners.

Surprisingly it has been discovered that a concentrate containing a particular synergic mixture of surfactants (a) and (b) of the invention in a liquid medium wholly or partly formed from at least one vegetable oil alkyl ester (c) may be thickened solely with a phylllosilicate (d) of the invention combined with one activator (e) of said phyllosilicate, provided that said phyllosilicate is present in an amount of at least 4 % by weight relative to the total weight of the concentrate.

Naturally, a concentrate formulation according to the invention may further contain any additive usually contemplated in pesticide formulation like for example safeners or biocides.

According to a specific embodiment, the claimed concentrate may comprise at least, and preferably consists in:
(a) 10 to 80% by weight of sorbitol derivative(s) surfactant(s);
(b) 2 to 20% by weight of alkyl-benzene sulfonate surfactant(s);
(c) 10 to 90% by weight of one vegetable oil alkyl ester or mixtures thereof;
(d) 4% to 10% by weight of phyllosilicate(s) and in particular of modified bentonite; and
(e)0.5 to 3.5% by weight of activator of said phyllosilicate(s) and in particular of propylene carbonate.

A concentrate formulation according to the invention may be obtained by adding, in the order listed, a vegetable oil alkyl ester, a phyllosilicate as thickener, an activator for the thickener and the surfactants according to the invention to a homogenizer.

More particularly such a concentrate may be obtained as detailed in Examples 1-2.

As shown in the following examples, the concentrate formulations are pourable. In particular, they have a viscosity ranging from 500 to 3000 mPa.s.

The viscosity of the concentrate formulations may be measured on a Brookfield viscometer with a LV2 or LV3 spindle at a rotational speed of 20 rotations per minute (rpm).

Moreover, the concentrate formulations according to the invention show a good storage stability, are emulsifiable and provide stable emulsions when diluted into water as shown in examples 1 and 2.

Indeed the obtained emulsions appear to be stable two hours after their formation which means that no or only little phase separation is observed and no or only a little quantity of cream is formed during this time.

### APPLICATIONS

As stated previously, the concentrate formulations according to the invention allow to achieve stabilized oil dispersions or emulsions with a great diversity of salts and/or active materials, in particular active compounds used to control agricultural pests. However, these concentrate formulations may also be convenient for vehiculing other active materials like fertilizers. These active materials and/or salts may be of very different chemical nature, like for example organic, inorganic, liposoluble or not.

The concentrate formulations may be highlighted in many ways.

Firstly, they may be used as final oil dispersions that are directly prepared by the farm operators by dilution of the concentrates with water and optionally by addition of some additives.

Moreover, they may be used by industrial firms as vehicles for a plurality of pesticidal active materials.

Thus, the farm operators may prepare pulverizable liquid compositions and in particular aqueous emulsions or suspoemulsions by diluting a concentrate according to the invention. Generally, they just proceed to a dilution with water and oil if necessary, and optionally also supplement the so-obtained pulverizable formulation with at least one solid material chosen from salts, hydrocolloids and their mixtures. Of course, it is also possible for a concentrate formulation according to the invention to already contain such a solid material.

More particularly, the salts may be chosen among sodium carbonate, sodium bicarbonate, ammonium sulfate and their mixtures.

As hydrocolloid particularly convenient for the invention, may be cited the guar.

Thus, a concentrate formulation according to the invention may be used by the farm operators for preparing different pulverizable compositions which may be kept for a long time without any undesirable phenomenon of demixtion.

The non-aqueous concentrate formulations supplemented with at least one solid material chosen from salts like sodium carbonate, sodium bicarbonate, ammonium sulfate or their mixtures; hydrocolloids such as guar; and their mixtures as well as the corresponding emulsions obtained by a dilution of the concentrates into water, are also known under the name of tank-mix.

A tank-mix may be obtained by adding to a concentrate formulation according to the invention prepared as above mentioned, at least a solid material chosen from salts, hydrocolloids and their mixtures to a homogenizer. The so obtained composition is then blended and diluted or not with water to form an emulsion.

Thus, according to a specific embodiment a tank-mix according to the invention contains less than 2% by weight of water and preferably is anhydrous.

Tank-mix formulations according to the invention are pourable, show a good storage stability, are emulsifiable and provide stable emulsions when diluted into water.

The concentrate formulation according to the invention is also particularly interesting for industrial firms which, by using only one concentrate, may prepare a great diversity of pesticidal oil dispersions.

Thus, as previously disclosed, a concentrate formulation according to the invention may further be supplemented with at least one pesticidal active material to form a pesticidal oil dispersion. As usual, this pesticidal oil dispersion may be wet-milled to reduce particle size of the active(s).

The concentrates of the invention are particularly convenient for the stable dispersion of solid active materials.

In particular, a pesticidal oil dispersion according to the invention may contain until 50 % in particular from 1 to 30 % by weight of solid pesticidal active material(s) with respect to its total weight.

The particles size of such a solid active material preferably is lower than 50 µm in particular lower than 20 µm and more particularly lower than 10 µm. This size may be measured by laser diffraction (CIPAC MT 187) or rough estimation of average diameter by optical microscopy.

Examples of suitable insoluble pesticidal active material are abamectin, azamethiphos, azoxystrobin, cyproconazole, bordeaux mixture, carbendazim, chlorsulfuron, copper hydroxide, copper oxide, copper oxychloride, cymoxanil, diflubenzuron, PMP, ethofumesate, DMP, lenacil, fenoxaprop-p-ethyl, iodosulfuron, florasulam, flutriafol, imidacloprid, imidacloprid, b-cyfluthrin, indoxacarb, iprodione, isoproturon, mancozeb, copper oxy, metamitron, nicosulfuron, rimsulfuron, thiacloprid, deltamethrin, thiobendazole, uniconazole, difenconazole, oxyfluorfen, quizalofop-p-ethyl, tebuconazole and their mixtures.

More particularly such a pesticidal oil dispersion may be obtained as detailed in Example 4.

Later, when the farm operators want to use the pesticidal oil dispersion, they just have to dilute it into water to form an emulsion or suspoemulsion.

It has to be noticed that the concentrate formulations according to the invention keep their storage stability even when supplemented with active materials as shown in example 4.

This example also shows that these pesticidal oil dispersions are still pourable. In particular, they have a viscosity ranging from 500 to 3000 mPa.s.

At last, this example shows that the pesticidal oil dispersions according to the invention are emulsifiable and provide stable emulsions when diluted into water. Indeed the obtained emulsions appear to be stable two hours after their formation which means that no or only little phase separation is observed and no or only a little quantity of cream is formed during this time.

The following examples serve merely to illustrate the invention.

### EXAMPLES

### Examples 1-2 - Concentrate formulations

a) The compositions of Example 1-2 were made by adding, in the order listed and in the contents set forth in Table 1 below, a vegetable oil alkyl ester (rapeseed oil methyl ester), a thickener (organic derivative of hectorite clay; Bentone 27V or Bentone 34, Elementis), an activator for the thickener (propylene carbonate) and an emulsifier blend composed of a non-ionic surfactant (Alkamuls T/85V, Rhodia Inc.) and of an anionic surfactant (Rhodacal 60BE, Rhodia Inc.) to a homogenizer (Ultra Turrax high speed homogenizer or IKA CMS 2000).
The viscosity of each of the compositions of Examples 1-2 was measured using a Brookfield Rheometer equipped with a LV2 spindle at 20 rpm.
The results are given in Table 1 below.

**Table 1**

| Category | Material | Content (wt %) | |
|---|---|---|---|
| | | Ex 1 | Ex 2 |
| Vegetable oil alkyl ester | Rapeseed methyl ester | 70.35 | 71.90 |
| Thickener | Bentone 27V | 5.00 | |
| | Bentone 34 | | 4.20 |
| Activator for the thickener | propylene carbonate | 1.65 | 1.40 |
| Non-ionic surfactant | Alkamuls T/85V | 18.40 | 18.00 |
| Anionic surfactant | Rhodacal 60BE | 4.60 | 4.50 |
| Viscosity at 24°C (mPa.s) | | from 800 to 1400 | from 1200 to 2200 |

b) The stability of some of the compositions of Examples 1-2 to storage was evaluated, using Collaborative International Pesticides Analytical Council ("CIPAC") Method MT 39.3, *"Low Temperature stability of Liquid Formulations"* and CIPAC Method 46.3, *"Accelerated storage procedure",* as follows.

The volume proportion of phase separation of the compositions was recorded by eyes while using a decimeter to quantify % of top or bottom separation (measured separation height ^{∗} 100 divided by total formulation height) after a storage at 24°C during 1 month, after a storage at 0°C during 7 days, optionally after a storage at 45°C during 1 month and after a storage at 54°C during 14 days.

These tests enable to stimulate an accelerated aging of the compositions and thus to evaluate the evolution of their stability over time.

The results related to compositions of examples 1 and 2 are respectively given in Table 2 and 3 below.

The following experiments have been made after some storage tests of compositions of examples 1 and 2.
- the viscosity was measured using a Brookfield Rheometer equipped with a LV3 spindle at 20 rpm;
- the pourability was evaluated by eyes while inverting the vial; and
- the composition was diluted in CIPAC D water to form an emulsion that contains 1% of the concentrate formulation, at a temperature of 30°C (dispersion test, CIPAC MT36) . Two hours after its formation, its stability has been evaluated by the observation of the formation of any phase separation of cream or not.

The corresponding results are given in Tables 2 and 3 below.

**Table 2- Results of the tests realized on composition of Ex.1**

| | 1 month at 24°C | 7 days at 0°C | 14 days at 54°C |
|---|---|---|---|
| Top phase separation (%) | 2 to 7 | 0 | 2 to 4 |
| Viscosity (mPa.s) at 24°C | 800 to 1400 | 800 to 1400 | 800 to 1400 |
| Pourability | pourable | pourable | pourable |
| Dispersion in CIPAC D water at 30°C after 2 hours | cream traces | cream traces | cream traces |

**Table 3 - Results of the tests realized on composition of Ex.2**

| | 1 month at 24°C | 7 days at 0°C | 1 month at 45°C | 14 days at 54°C |
|---|---|---|---|---|
| Top phase separation (%) | 0 | 0 | 0 | 0 |
| Viscosity (mPa.s) at 24°C | 1200 to 2200 | | | |
| Pourability | pourable | pourable | pourable | pourable |
| Dispersion in CIPAC D water at 30°C after 2 hours | cream traces | cream traces | cream traces | cream traces |

The results clearly show that the compositions of examples 1 and 2 exhibit a good storage stability regardless of the storage conditions since the phase separation (top separation) is either very low or not observed. In all the cases, no bottom separation (settling) was observed. This indicates that these compositions are stable over time, which is a desired outcome of the present invention.

These results also point out that the viscosity of the compositions remains low over time such that they are still pourable even after a long time of storage.

Moreover, these results emphasize that the exemplified compositions which have been diluted in water to form an emulsion are stable 2 hours after their formation even after a long time of storage of the corresponding concentrate formulations.

### Example 3- Comparative concentrate formulation

The concentrate of Example 3 was made in the same way as the concentrates of Examples 1-2.

The viscosity of the so-obtained concentrate was measured in the same way as for the concentrates of Examples 1-2. The result is given in Table 4 below.

**Table 4**

| Category | Material | Ex 3 (Content (wt %) |
|---|---|---|
| Vegetable oil alkyl ester | Rapeseed oil methyl ester | 73.675 |
| Thickener | Bentone 27V | 2.500 |
| Activator for the thickener | propylene carbonate | 0.825 |
| Non-ionic surfactant | Alkamuls T/85V | 21.850 |
| Anionic surfactant | Rhodafac MB | 1.150 |
| Viscosity (mPa.s) at 19°C: 7300 (7000 at 24°C) | | |

It has to be noted that the anionic surfactant of this concentrate is not in compliance with the present invention since it is a polyethylene tridecyl ether phosphate surfactant and not an alkyl-benzene sulfonate surfactant.

The anionic surfactant of this concentrate having the effect of thickening the composition, the quantity of thickener had to be reduced in this composition such that its content is of less than 4% by weight relative of the total weight of the composition and does thus not comply with the present invention.

Despite the small quantity of thickener in this concentrate, it appears that it is hardly pourable and consequently less interesting than the concentrates of the present invention regarding the requested properties for a concentrate.

### Example 4 - Pesticidal oil dispersion formulation with nicosulfuron as active agent

a) The composition of Example 4 was made by adding in the contents set forth in Table 5 below, the concentrate formulation of example 1 and an active compound (technical nicosulfuron 96% purity) to a homogenizer (Ultra Turrax high speed homogenizer). The so obtained composition is then wet-milled for 20 minutes at 3300rpm (motor mill apparatus).

**Table 5**

| Material | Ex.4 Content (g/l) |
|---|---|
| Concentrate formulation | 823.3 (of concentrate of Ex.1) |
| Nicosulfuron (tech. 96%) | 166.7 |
| Viscosity (mPa.s) | 1460 at 20°C |

The mean size of the particles of nicosulfuron has been measured in the composition of Example 4 and is below 10µm diameter (optical microscopy) which is satisfactory regarding the invention.
b) As for the concentrates of Examples 1-2, the stability of the pesticidal oil dispersions of Example 4 to storage was evaluated.

The conditions of storage and the results are given in Table 6 below.

As for the concentrates of Examples 1-2, the viscosity, the pourability and the stability of the composition of Example 4 when diluted in water to form an emulsion has been evaluated after the storage tests, in the same conditions as for the concentrates of Examples 1-2. The mean size of the particles of nicosulfuron has also been measured after the storage tests (optical microscopy).

The corresponding results are given in Table 6 below.

**Table 6- Results of the tests realized on pesticidal dispersion of Ex.4**

| | 1 month at 45°C | 2 months at 45°C |
|---|---|---|
| Top phase separation (%) | 6 | 6 |
| Viscosity (mPa.s) | 900 at 20°C | 860 at 20°C |
| Pourability | pourable | pourable |
| Mean size of the particles of nicosulfuron (µm) | <10 | <10 |
| Dispersion in CIPAC D water at 30°C after 2 hours | no formation of cream | cream traces |

The results clearly show that the pesticidal oil dispersion of example 4, exhibit a good storage stability regardless of the storage conditions since the phase separation (top separation) is very low or not observed. In all the cases, no bottom separation (settling) was observed. This indicates that this composition is stable over time, which is a desired outcome of the present invention.

These results also point out that the viscosity of the composition remains low over time such that it is still pourable even after a long time of storage.

Moreover, these results emphasize that the exemplified pesticidal dispersion, when been diluted in water to form an emulsion is stable 2 hours after its formation even after a long time of storage of the corresponding pesticidal dispersion.

The mean size of the particles of nicosulfuron is less than 10 µm diameter as requested.

## Claims

1. A non-aqueous, emulsifiable and pourable concentrate formulation,
that is able to form an emulsion when diluted into water and mixed by inversion of the vial comprising:
(a)at least one non-ionic surfactant chosen from sorbitol derivatives, fatty alcohol ethoxylates, fatty acid ethoxylates and mixtures thereof;
(b)at least one alkyl-benzene sulfonate surfactant as anionic surfactant;
(c)a liquid medium wholly or partly formed from at least one vegetable oil alkyl ester or mixtures thereof;
(d)at least 4% by weight of at least one phyllosilicate as thickener relative to the total weight of the composition; and
(e)at least one activator of said phyllosilicate, chosen amongst methanol, ethanol, acetone, methylethylketone and propylene carbonate.

2. The concentrate formulation according to claim 1, wherein component (b) is present in a weight ratio (b)/(d) ranging from 0.4 to 5.

3. The concentrate formulation according to claim 1 or 2, comprising at least:
(a) 10 to 80% by weight of sorbitol derivative(s) surfactant(s);
(b) 2 to 20% by weight of alkyl-benzene sulfonate surfactant(s);
(c) 10 to 80% by weight of one vegetable oil alkyl ester or mixtures thereof;
(d) 4% to 10% by weight of phyllosilicate(s); and
(e)0.5 to 3.5% by weight of activator of said phyllosilicate(s).

4. The concentrate formulation according to any one of the preceding claims, **characterized in that** the phyllosilicate is a modified bentonite.

5. The concentrate formulation according to any one of the preceding claims, **characterized in that** the activator of said phyllosilicate is propylene carbonate.

6. The concentrate formulation according to any one of the preceding claims, wherein the mixture of (a) and (b) has an HLB value ranging from 9.5 to 11.5.

7. The concentrate formulation according to any one of the preceding claims, **characterized in that** it further comprises at least one solid material chosen from salts; hydrocolloids; and their mixtures.

8. The concentrate formulation according to the preceding claim, **characterized in that** the salts are chosen amongst sodium carbonate sodium bicarbonate, ammonium sulfate or their mixtures and the hydrocolloids is guar.

9. Use of a concentrate formulation according to any one of the previous claims for preparing a pesticidal oil dispersion.

10. Use according to claim 9 for preparing a liquid aqueous emulsion or suspoemulsion.

11. An emulsifiable and stable pesticidal oil dispersion comprising:
(a)at least one non-ionic surfactant chosen from sorbitol derivatives, fatty alcohol ethoxylates, fatty acid ethoxylates and mixtures thereof;
(b)at least one alkyl-benzene sulfonate surfactant as anionic surfactant;
(c)a liquid medium wholly or partly formed from at least one vegetable oil alkyl ester or mixtures thereof;
(d)at least one phyllosilicate as thickener, in particular modified bentonite;
(e)at least one activator of said phyllosilicate, chosen amongst methanol, ethanol, acetone, methylethylketone and propylene carbonate; and
(f) at least one oil insoluble pesticidal active material;
wherein component (b) is present in a weight ratio (b)/(d) ranging from 0.4 to 5 and preferably from 0.8 to 1.2.

12. A method for making a pesticidal oil dispersion according to claim 11 comprising the mixing of a concentrate formulation according to any one of claims 1 to 8 with at least one oil insoluble pesticidal active material.

13. Use of a pesticidal oil dispersion according to claim 11 for preparing a liquid pesticidal aqueous emulsion in particular convenient for spraying.

14. A method of preventing and/or combating infestation of plants by pests and regulating plant growth comprising the application on said plant or locus of a spray mixture obtained by diluting with water a pesticidal oil dispersion according to claim 8 or by adding at least one oil insoluble pesticidal active material and water to a concentrate formulation according to any one of claims 1 to 8.

## Patentansprüche

1. Nichtwässrige, emulgierbare und gießbare Konzentratformulierung, die beim Verdünnen in Wasser und Mischen durch Invertieren des Gefäßes fähig ist, eine Emulsion zu bilden, umfassend:
(a) mindestens ein nichtionisches Tensid, das aus Sorbitolderivaten, Fettalkoholethoxylaten, Fettsäureethoxylaten und Mischungen davon ausgewählt ist;
(b) mindestens ein Alkylbenzolsulfonat-Tensid als anionisches Tensid;
(c) ein flüssiges Medium, das gänzlich oder zum Teil aus mindestens einem Pflanzenölalkylester oder Mischungen davon gebildet ist;
(d) mindestens 4 Gewichts-%, bezogen auf das Gesamtgewicht der Zusammensetzung, mindestens eines Schichtsilikats als Verdickungsmittel und
(e) mindestens einen Aktivator für das Schichtsilikat, der unter Methanol, Ethanol, Aceton, Methylethylketon und Propylencarbonat ausgewählt ist.

2. Konzentratformulierung nach Anspruch 1, wobei Komponente (b) in einem Gewichtsverhältnis (b)/(d) im Bereich von 0,4 bis 5 vorliegt.

3. Konzentratformulierung nach Anspruch 1 oder 2, mindestens umfassend:
(a) 10 - 80 Gewichts-% Sorbitolderivat-Tensid(e);
(b) 2 - 20 Gewichts-% Alkylbenzolsulfonat-Tensid(e) ;
(c) 10 - 80 Gewichts-% eines Pflanzenölalkylesters oder Mischungen davon;
(d) 4 - 10 Gewichts-% Schichtsilikat(e) und
(e) 0,5 - 3,5 Gewichts-% Aktivator für das Schichtsilikat bzw. die Schichtsilikate.

4. Konzentratformulierung nach einem der vorhergehenden Ansprüche, **dadurch gekennzeichnet, dass** es sich bei dem Schichtsilikat um modifizierten Bentonit handelt.

5. Konzentratformulierung nach einem der vorhergehenden Ansprüche, **dadurch gekennzeichnet, dass** es sich bei dem Aktivator für das Schichtsilikat um Propylencarbonat handelt.

6. Konzentratformulierung nach einem der vorhergehenden Ansprüche, wobei die Mischung von (a) und (b) einen HLB-Wert im Bereich von 9,5 bis 11,5 aufweist.

7. Konzentratformulierung nach einem der vorhergehenden Ansprüche, **dadurch gekennzeichnet, dass** sie ferner mindestens einen festen Stoff umfasst, der aus Salzen, Hydrokolloiden und Mischungen davon ausgewählt ist.

8. Konzentratformulierung nach dem vorhergehenden Anspruch, **dadurch gekennzeichnet, dass** die Salze aus Natriumcarbonat, Natriumhydrogencarbonat, Ammoniumsulfat oder deren Mischungen ausgewählt sind und dass es sich bei den Hydrokolloiden um Guar handelt.

9. Verwendung einer Konzentratformulierung nach einem der vorhergehenden Ansprüche zur Herstellung einer pestiziden Öldispersion.

10. Verwendung nach Anspruch 9 zur Herstellung einer flüssigen wässrigen Emulsion oder Suspoemulsion.

11. Emulgierbare und stabile Öldispersion, umfassend:
(a) mindestens ein nichtionisches Tensid, das aus Sorbitolderivaten, Fettalkoholethoxylaten, Fettsäureethoxylaten und Mischungen davon ausgewählt ist;
(b) mindestens ein Alkylbenzolsulfonat-Tensid als anionisches Tensid;
(c) ein flüssiges Medium, das gänzlich oder zum Teil aus mindestens einem Pflanzenölalkylester oder Mischungen davon gebildet ist;
(d) mindestens ein Schichtsilikat als Verdickungsmittel, insbesondere modifizierten Bentonit;
(e) mindestens einen Aktivator für das Schichtsilikat, der unter Methanol, Ethanol, Aceton, Methylethylketon und Propylencarbonat ausgewählt ist;
(f) mindestens einen ölunlöslichen pestiziden Wirkstoff;
wobei Komponente (b) in einem Gewichtsverhältnis (b)/(d) im Bereich von 0,4 bis 5 und vorzugsweise 0,8 bis 1,2 vorliegt.

12. Verfahren zur Herstellung einer pestiziden Öldispersion nach Anspruch 11, umfassend das Mischen einer Konzentratformulierung nach einem der Ansprüche 1 bis 8 mit mindestens einem ölunlöslichen pestiziden Wirkstoff.

13. Verwendung einer pestiziden Öldispersion nach Anspruch 11 zur Herstellung einer flüssigen pestiziden Emulsion, die insbesondere zum Sprühen geeignet ist.

14. Verfahren zur Vorbeugung und/oder Bekämpfung von Pflanzenbefall mit Schädlingen und Regulierung von Pflanzenwachstum, umfassend die Anwendung einer Sprühmischung, die durch Verdünnen einer pestiziden Öldispersion nach Anspruch 8 mit Wasser oder durch Hinzugeben von mindestens einem ölunlöslichen pestiziden Wirkstoff und Wasser zu einer Konzentratformulierung nach einem der Ansprüche 1 bis 8 erhalten wurde, auf die Pflanze oder den Standort.

## Revendications

1. Formulation concentrée non aqueuse, émulsifiable et versable,
qui peut former une émulsion lorsqu'elle est diluée dans l'eau et mélangée par retournement du flacon comprenant :
(a) au moins un tensioactif non ionique choisi parmi des dérivés de sorbitol, des éthoxylates d'alcool gras, des éthoxylates d'acide gras et des mélanges de ceux-ci ;
(b) au moins un tensioactif à base d'alkylbenzènesulfonate en tant que tensioactif anionique ;
(c) un milieu liquide totalement ou partiellement formé d'au moins un ester d'alkyle d'huile végétale ou de mélanges de ceux-ci ;
(d) au moins 4 % en poids d'au moins un phyllosilicate en tant qu'épaississant par rapport au poids total de la composition ; et
(e) au moins un activateur dudit phyllosilicate, choisi parmi le méthanol, l'éthanol, l'acétone, la méthyléthylcétone et le carbonate de propylène.

2. Formulation concentrée selon la revendication 1, dans laquelle le composant (b) est présent en un rapport en poids (b)/(d) dans la plage de 0,4 à 5.

3. Formulation concentrée selon la revendication 1 ou 2, comprenant au moins :
(a) 10 à 80 % en poids de dérivé (s) tensioactif(s) de sorbitol ;
(b) 2 à 20 % en poids de tensioactif(s) à base d'alkylbenzènesulfonate ;
(c) 10 à 80 % en poids d'un ester d'alkyle d'huile végétale ou de mélanges de ceux-ci ;
(d) 4 % à 10 % en poids de phyllosilicate(s) ; et
(e) 0,5 à 3,5 % en poids d'activateur dudit/desdits phyllosilicate(s).

4. Formulation concentrée selon l'une quelconque des revendications précédentes, **caractérisée en ce que** le phyllosilicate est une bentonite modifiée.

5. Formulation concentrée selon l'une quelconque des revendications précédentes, **caractérisée en ce que** l'activateur dudit phyllosilicate est le carbonate de propylène.

6. Formulation concentrée selon l'une quelconque des revendications précédentes, dans laquelle le mélange de (a) et (b) a une valeur HLB dans la plage de 9,5 à 11,5.

7. Formulation concentrée selon l'une quelconque des revendications précédentes, **caractérisée en ce qu'**elle comprend en outre au moins un matériau solide choisi parmi des sels ; des hydrocolloïdes ; et leurs mélanges.

8. Formulation concentrée selon la revendication précédente, **caractérisée en ce que** les sels sont choisis parmi le carbonate de sodium, le bicarbonate de sodium, le sulfate d'ammonium ou leurs mélanges et les hydrocolloïdes sont la gomme de guar.

9. Utilisation d'une formulation concentrée selon l'une quelconque des revendications précédentes pour préparer une dispersion d'huile pesticide.

10. Utilisation selon la revendication 9 pour préparer une émulsion ou suspoémulsion aqueuse liquide.

11. Dispersion d'huile pesticide émulsifiable et stable comprenant :
(a) au moins un tensioactif non ionique choisi parmi des dérivés de sorbitol, des éthoxylates d'alcool gras, des éthoxylates d'acide gras et des mélanges de ceux-ci ;
(b) au moins un tensioactif à base d'alkylbenzènesulfonate en tant que tensioactif anionique ;
(c) un milieu liquide totalement ou partiellement formé d'au moins un ester d'alkyle d'huile végétale ou de mélanges de ceux-ci ;
(d) au moins un phyllosilicate en tant qu'épaississant, en particulier une bentonite modifiée ;
(e)au moins un activateur dudit phyllosilicate, choisi parmi le méthanol, l'éthanol, l'acétone, la méthyléthylcétone et le carbonate de propylène ;
et
(f) au moins un matériau actif pesticide insoluble dans l'huile ;
dans lequel le composant (b) est présent dans un rapport en poids (b)/(d) dans la plage de 0,4 à 5 et de préférence de 0,8 à 1,2.

12. Procédé de fabrication d'une dispersion d'huile pesticide selon la revendication 11, comprenant le mélange d'une formulation concentrée selon l'une quelconque des revendications 1 à 8 avec au moins un matériau actif pesticide insoluble dans l'huile.

13. Utilisation d'une dispersion d'huile pesticide selon la revendication 11 pour préparer une émulsion aqueuse de pesticide liquide, en particulier adaptée pour pulvérisation.

14. Procédé de prévention et/ou de lutte contre l'infestation d'une plante par des organismes nuisibles et de régulation de croissance d'une plante comprenant l'application sur ladite plante ou son emplacement d'un mélange de pulvérisation obtenu par dilution avec de l'eau d'une dispersion d'huile pesticide selon la revendication 8 ou par ajout d'au moins un matériau actif pesticide insoluble dans l'huile et d'eau à une formulation concentrée selon l'une quelconque des revendications 1 à 8.
